# EUROPÄISCHE PATENTANMELDUNG

(11) **EP 1 813 222 A1**
(43) Veröffentlichungstag der Anmeldung: **01.08.2007**
(21) Anmeldenummer: 06025652.6
(22) Anmeldetag: 12.12.2006
(51) Int. Cl.: A61C 7/28

(54) **Orthodontische Befestigungsvorrichtung**

(30) Priorität: 25.01.2006 DE 102006004122
(71) Anmelder: DENTAURUM J.P. WINKELSTROETER KG, 75228 Ispringen (DE)
(72) Erfinder: Winkelstroeter, Axel, 75175 Pforzheim (DE)
(74) Vertreter: Hoeger, Stellrecht & Partner Patentanwälte

(57) **Zusammenfassung**

Die Erfindung betrifft eine orthodontische Befestigungsvorrichtung mit einem Bracket und einem Verriegelungsglied, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst sowie zwei im Abstand zueinander angeordnete Flügelpaare, und wobei das Verriegelungsglied einen Deckel umfasst, der zwischen einer offenen, den Schlitz freigebenden Stellung und einer geschlossenen, den Schlitz im Bereich zwischen den beiden Flügelpaaren überdeckenden Stellung um eine parallel zur Längsrichtung des Schlitzes ausgerichtete Schwenkachse schwenkbar am Bracket gelagert ist und der in seiner geschlossenen Stellung mit dem Bracketkörper verrastbar ist. Um die orthodontische Befestigungsvorrichtung derart weiterzubilden, dass sie einen konstruktiv einfacheren und störungsunempfindlicheren Aufbau aufweist, wird erfindungsgemäß vorgeschlagen, dass das Bracket zumindest eine Lagerbohrung aufweist, deren Längsachse parallel zur Längsachse des Schlitzes ausgerichtet ist und in der eine im Querschnitt runde Lagerwelle drehbar gelagert ist, und dass der Deckel an der Lagerwelle drehfest gehalten ist.

## Beschreibung

Die Erfindung betrifft eine orthodontische Befestigungsvorrichtung mit einem Bracket und einem Verriegelungsglied, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale Richtung und einen in okklusale Richtung vom Schlitz abstehenden Flügel aufweisen, und wobei das Verriegelungsglied einen Deckel umfasst, der zwischen einer offenen, den Schlitz freigebenden Stellung und einer geschlossenen, den Schlitz im Bereich zwischen den beiden Flügelpaaren überdeckenden Stellung um eine parallel zur Längsrichtung des Schlitzes ausgerichtete Schwenkachse schwenkbar am Bracket gelagert ist und der in seiner geschlossenen Stellung mit dem Bracketkörper verrastbar ist.

Um im Rahmen einer kieferorthopädischen Behandlung Fehlstellungen von Zähnen zu korrigieren, ist es bekannt, an den Zähnen Brackets zu befestigen, die durch einen in den jeweiligen Schlitz der Bracketkörper eingelegten elastischen Bogendraht miteinander verbunden werden. Über den Bogendraht können Richtkräfte auf die Zähne ausgeübt werden, so dass sich die Zahnstellung verändert. Um den Bogendraht an den Brackets zu befestigen und in seiner Ausrichtung festzulegen, kommen häufig Ligaturen zum Einsatz in Form kleiner, elastomerer O-Ringe oder auch in Form von Drähten. Die Ligaturen werden nach Einbringen des Bogendrahtes in den Schlitz um die Flügel des Bracketkörpers herumgeführt und drücken den Bogendraht gegen den Boden des Schlitzes. Die Festlegung der Ligaturen ist etwas zeitaufwändig. Es sind deshalb auch sogenannte selbstligierende Bracketsysteme bekannt, bei denen der Bogendraht mittels schwenkbar an den Brackets gelagerter Verriegelungsglieder im Schlitz gehalten wird. In der Gebrauchsmusterschrift DE 299 24 576 U1 wird in diesem Zusammenhang vorgeschlagen, einen Deckel an einem parallel zur Längsrichtung des Schlitzes ausgerichteten Gelenkzapfen schwenkbar zu lagern. Der Gelenkzapfen ist am freien Ende eines Stiftes festgelegt, der einen Durchgang des Bracketkörpers durchgreift. Der Durchgang erstreckt sich in gingival-okklusale Richtung, und der dem Gelenkzapfen abgewandte Endbereich des Stiftes steht über den Durchgang hervor und ist rechtwinklig abgebogen. Zwischen dem Gelenkzapfen und einem Außenrand des Bracketkörpers ist eine Feder eingespannt, die den Stift in Umfangsrichtung umgibt. Der Deckel kann um die Längsachse des Gelenkstiftes verschwenkt werden und kann mit seinem dem Gelenkzapfen abgewandten Endbereich auf der dem Gelenkzapfen abgewandten Seite des Schlitzes die beiden Flügel hintergreifen zur Festlegung des Deckels am Bracketkörper. In seiner geschlossenen Stellung überdeckt der Deckel die den Gelenkzapfen abgewandten Flügel des Bracketkörpers vollständig und liegt auf der Oberseite der Flügel auf. Nachteilig an der voranstehend beschriebenen orthodontischen Befestigungsvorrichtung ist deren konstruktiv aufwändiger und störungsanfälliger Aufbau.

Von der Firma Ormco Corporation, USA, ist eine orthodontische Befestigungsvorrichtung in Form eines Bukkalröhrchens bekannt mit einem von mesial nach distal verlaufenden Schlitz, der mittels eines verschwenkbar gelagerten Deckels abgedeckt werden kann. Der Deckel ist in Form eines Blechteiles ausgebildet mit einander abgewandten, fluchtend zueinander ausgerichteten seitlichen Laschen zur Lagerung des Deckels in Lagerausnehmungen. Die Lagerausnehmungen sind in Form von ungefähr halbkreisförmigen Vertiefungen ausgestaltet, an die jeweils eine Abdeckung angeformt ist, die nach dem Einsetzen einer Lasche des Deckels so weit verbogen werden kann, dass die Vertiefung außenseitig abgedeckt und dadurch die Lasche des Deckels in der Vertiefung gehalten ist. In seiner Schließstellung kann der Deckel mit dem Bukkalröhrchen verrastet werden, indem eine Stirnkante des Deckels einen korrespondierenden Vorsprung des Bukkalröhrchens hintergreift. Die Stirnkante des Deckels bildet somit ein Rastelement aus. Mittels des verschwenkbar gelagerten Deckels kann der Schlitz des Bukkalröhrchens nach dem Einbringen eines Bogendrahtes verschlossen werden. Allerdings kann sich der Deckel beim Verschwenken mit seinen seitlich abstehenden Laschen in den zugeordneten Vertiefungen des Bukkalröhrchens verkanten, wobei die Gefahr besteht, dass beim weiteren Verschwenken des Deckels die seitlich abstehenden Laschen abbrechen.

Aufgabe der vorliegenden Erfindung ist es, eine orthodontische Befestigungsvorrichtung der eingangs genannten Art derart weiterzubilden, dass sie einen konstruktiv einfacheren und störungsunempfindlicheren Aufbau aufweist.

Diese Aufgabe wird bei einer orthodontischen Befestigungsvorrichtung der gattungsgemäßen Art erfindungsgemäß dadurch gelöst, dass das Bracket zumindest eine Lagerbohrung aufweist, deren Längsachse parallel zur Längsrichtung des Schlitzes ausgerichtet ist und in der eine im Querschnitt runde Lagerwelle drehbar gelagert ist, und dass der Deckel an der Lagerwelle drehfest gehalten ist. Durch die Bereitstellung einer im Querschnitt runden Lagerwelle, die in mindestens einer Lagerbohrung des Brackets drehbar gelagert ist und an der der Deckel drehfest gehalten ist, kann der Deckel mit geringer Schwenkkraft verschwenkt werden, ohne dass die Gefahr besteht, dass die Lagerwelle in der Lagerbohrung verkantet oder verhakt. Die erfindungsgemäße Befestigungsvorrichtung ist somit sehr unanfällig gegenüber Störungen, auch nach wiederholtem Öffnen und Verschließen des Deckels weist dieser eine gute Verschwenkbarkeit auf.

Die erfindungsgemäße orthodontische Befestigungsvorrichtung bildet ein selbstligierendes Bracketsystem aus, mit dessen Hilfe Zahnbewegungen friktionsarm durchgeführt werden können. Hierbei können zur Korrektur von Zahn-Fehlstellungen verhältnismäßig kleine Kräfte zum Einsatz kommen, die die Gefahr einer Wurzelresorption sehr gering halten.

Die erfindungsgemäße orthodontische Befestigungsvorrichtung kann sehr klein ausgestaltet sein, wodurch der Patientenkomfort gesteigert werden kann. Außerdem lässt sich das Demineralisierungsrisiko gering halten.

Die Handhabung der erfindungsgemäßen orthodontischen Befestigungsvorrichtung ist sehr einfach, so dass die Behandlungszeit beim Wechsel eines Bogendrahtes stark reduziert werden kann.

Besonders günstig ist es, wenn sowohl die mindestens eine Lagerbohrung als auch die Lagerwelle einen kreisförmigen Querschnitt aufweisen. Lagerbohrung und Lagerwelle bilden somit einen geometrisch passenden Formschluss aus, der eine Führung für den Deckel ausbildet, wenn dieser verschwenkt wird.

Von Vorteil ist es, wenn der Deckel mit der Lagerwelle stoffschlüssig verbunden ist. Es kann beispielsweise vorgesehen sein, dass der Deckel mit der Lagerwelle verschweißt ist. Dies gibt die Möglichkeit, zunächst die Lagerwelle durch die mindestens eine Lagerbohrung hindurchzuführen und anschließend den Deckel an der Lagerwelle festzulegen.

Bei einer bevorzugten Ausführungsform weist das Bracket zwei fluchtend zueinander angeordnete Lagerbohrungen auf, die jeweils einen Endabschnitt der Lagerwelle aufnehmen. Die beiden Lagerbohrungen können im Abstand zueinander angeordnet sein, und im Bereich zwischen den beiden Lagerbohrungen kann der Deckel an der Lagerwelle festgelegt sein. Zur Fertigung der orthodontischen Befestigungsvorrichtung kann zunächst die Lagerwelle durch die beiden Lagerbohrungen hindurchgeführt werden, und anschließend kann der Deckel mit der Lagerbohrung stoffflüssig verbunden werden, beispielsweise verschweißt werden.

Vorzugsweise ist jede Lagerbohrung in einem Lagerteil angeordnet, das einstückig mit dem Bracketkörper und/oder der Bracketbasis verbunden ist. Dies gibt die Möglichkeit, das gesamte Bracket einschließlich der Lagerbohrungen als einstückiges Bauteil herzustellen, dessen Form nachträglich nicht geändert werden muss, insbesondere ist es nicht erforderlich, einzelne Bereiche des Brackets abzubiegen.

Bei einer vorteilhaften Ausführungsform der erfindungsgemäßen orthodontischen Befestigungsvorrichtung umfasst das Bracket zwei Lagerteile, die jeweils eine Lagerbohrung aufweisen und die bezogen auf die Längsrichtung des Schlitzes jeweils in Höhe eines Flügels mit dem Bracketkörper und/oder der Bracketbasis einstückig verbunden sind. Bevorzugt sind die Lagerteile jeweils unterhalb eines Flügels mit dem Bracketkörper und/oder der Bracketbasis verbunden.

Es kann vorgesehen sein, dass die Bracketbasis zusammen mit dem Bracketkörper und dem mindestens einen Lagerteil ein einstückiges Formteil aus Kunststoff, aus Keramik oder aus Metall ausbildet.

Zur Arretierung des Deckels in seiner Schließstellung ist es von besonderem Vorteil, wenn der Deckel zwei Rastelemente aufweist zum Verrasten des Deckels mit dem Bracketkörper. Der Einsatz zweier Rastelemente ermöglicht es, den Deckel auf einfache Weise mit dem Bracketkörper zu verrasten, wobei auf den Deckel nur eine verhältnismäßig geringe Kraft ausgeübt werden muss. Die Bereitstellung der beiden Rastelemente erleichtern somit das Verrasten des Deckels mit dem Bracketkörper. Vorzugsweise sind die Rastelemente an der der Lagerwelle abgewandten Stirnseite des Deckels angeordnet.

Günstig ist es, wenn der Deckel zwischen den beiden Rastelementen eine Aussparung aufweist. Die Aussparung kann als Werkzeug-Eingriffshilfe dienen zum einfachen Öffnen des Deckels. Vorzugsweise ist die Aussparung in dem der Schwenkachse abgewandten Endbereich des Deckels angeordnet, beispielsweise in Form einer Vertiefung der Stirnseite des Deckels.

Günstig ist es, wenn die Schwenkachse des Deckels seitlich versetzt zum Schlitz angeordnet ist. So kann beispielsweise vorgesehen sein, dass die Schwenkachse in labial-lingualer Richtung in einer Höhe unterhalb des Bodens des Schlitzes positioniert ist. Es hat sich gezeigt, dass durch eine Anordnung der Schwenkachse sowohl in okklusal-gingivaler Richtung als auch in labial-lingualer Richtung versetzt zum Boden des Schlitzes auf konstruktiv einfache Weise eine besonders gute Verschwenkbarkeit des Deckels erzielt werden kann.

Bei einer bevorzugten Ausführungsform der orthodontischen Befestigungsvorrichtung ist im Bereich zwischen den beiden Flügelpaaren zumindest ein Auflageteil seitlich neben einem Flügel und im Abstand zum benachbarten Flügel angeordnet, wobei der Deckel in seiner geschlossenen Stellung auf dem Auflageteil aufliegt und einen vom Schlitz abgewandten Endbereich des Auflageteils federelastisch hintergreift. Der federelastische Deckel überdeckt in seiner geschlossenen Stellung den Schlitz im Bereich zwischen den beiden Flügelpaaren, wobei er auf mindestens einem Auflageteil aufliegt, das seitlich neben dem Flügel angeordnet ist.

Das Auflageteil weist einen vom Schlitz abgewandten Endbereich auf, der vom Deckel in dessen geschlossener Stellung hintergriffen wird. Beim Übergang des Deckels von seiner offenen in seine geschlossene Stellung kann er sich so weit verformen, dass er ohne den Einsatz einer separaten Feder oder eines verschieblich gelagerten Halteteils den vom Schlitz abgewandten Endbereich des Auflageteils hintergreifen kann. Soll der Deckel wieder in seine offene Stellung überführt werden, so kann er hierzu mittels eines Werkzeuges so weit federelastisch verformt werden, dass er den Endbereich des Auflageteils freigibt und auf einfache Weise in seine offene Stellung überführt werden kann.

In seiner geschlossenen Stellung überdeckt der Deckel bevorzugt lediglich den Bereich zwischen den beiden Flügelpaaren. Dies hat den Vorteil, dass vom Kieferorthopäden im Rahmen spezieller Behandlungsverfahren zusätzliche metallische oder elastische Ligaturen verwendet werden können.

Von Vorteil ist es, wenn das mindestens eine Auflageteil einstückig mit einem Flügel verbunden ist. Auflageteil und Flügel können ein einstückiges Formteil ausbilden, so dass zusätzliche Mittel zur Festlegung des Auflageteils an dem unmittelbar benachbarten Flügel entfallen können.

Um eine glatte Außenoberfläche der orthodontischen Befestigungsvorrichtung zu erzielen, ist es günstig, wenn die Oberseite des mindestens einen Auflageteils um die Materialstärke des Deckels gegenüber der Oberseite des unmittelbar benachbarten Flügels zurückgesetzt ist. Der Deckel kann aus einem Flachmaterial, beispielsweise aus einem Blechstreifen, gebogen werden, und durch das Zurücksetzen der Oberseite des Auflageteils, auf der der Deckel in seiner geschlossenen Stellung aufliegt, gegenüber der Oberseite des unmittelbar benachbarten Flügels werden Stufen vermieden, die zu einer Irritierung des Patienten führen könnten.

Eine besonders störungsunempfindliche Ausgestaltung der erfindungsgemäßen orthodontischen Befestigungsvorrichtung zeichnet sich dadurch aus, dass der Bracketkörper mindestens zwei im Abstand zueinander angeordnete Auflageteile aufweist, die im Bereich zwischen den beiden Flügelpaaren jeweils seitlich neben einem Flügel angeordnet sind. Es kann beispielsweise vorgesehen sein, dass der Deckel zwischen den beiden Flügelpaaren auf der der Schwenkachse abgewandten Seite des Schlitzes auf zwei im Abstand zueinander angeordnete Auflageteile aufsetzbar ist, wenn er seine geschlossene Stellung einnimmt. Beide Auflageteile können jeweils einen freien Endabschnitt aufweisen, der vom Deckel in seiner geschlossenen Stellung hintergriffen werden kann. Ein im Schlitz angeordneter Bogendraht wird dadurch vom Deckel zuverlässig im Schlitz gehalten, ein unbeabsichtigtes Öffnen des Deckels wird vermieden.

Von Vorteil ist es, wenn der Bracketkörper zumindest ein Anschlagelement aufweist, das im Bereich zwischen den beiden Flügelpaaren seitlich neben einem Flügel angeordnet ist und an dessen Oberseite der Deckel in seiner geschlossenen Stellung anliegt. Bei einer derartigen Ausgestaltung kommt zusätzlich zu dem mindestens einen Auflageteil zumindest ein Anschlagelement zum Einsatz, an dem der Deckel in seiner geschlossenen Stellung oberseitig anliegt. Das Anschlagelement ist unmittelbar neben einem Flügel angeordnet im Bereich zwischen den beiden Flügelpaaren.

Bevorzugt ist das mindestens eine Anschlagelement einstückig mit einem Flügel verbunden. Flügel und Anschlagelement können beispielsweise ein einteiliges Formteil ausbilden.

Um auch bei Einsatz von mindestens einem Anschlagelement eine möglichst glatte Oberfläche der orthodontischen Befestigungsvorrichtung zu gewährleisten, ist bei einer vorteilhaften Ausführungsform vorgesehen, dass die Oberseite des mindestens einen Anschlagelements gegenüber der Oberseite des unmittelbar benachbarten Flügels um die Materialstärke des Deckels zurückgesetzt ist. Störende Irritationen des Patienten durch Stufen der orthodontischen Befestigungsvorrichtung werden dadurch gering gehalten.

Eine mechanisch besonders belastbare Ausgestaltung der erfindungsgemäßen orthodontischen Befestigungsvorrichtung zeichnet sich dadurch aus, dass der Bracketkörper zwei im Abstand zueinander angeordnete Anschlagelemente aufweist, die im Bereich zwischen den beiden Flügelpaaren jeweils seitlich neben einem Flügel angeordnet sind. Die beiden im Abstand zueinander auf einer Seite des Schlitzes im Bereich zwischen den beiden Flügelpaaren angeordneten Anschlagelemente stützen den Deckel in seiner geschlossenen Stellung zuverlässig ab. Der Deckel kann flächig an den Oberseiten der Anschlagelemente anliegen. Von besonderem Vorteil ist es, wenn die Anschlagelemente eine der Krümmung des Deckels entsprechend gekrümmte Anschlagfläche aufweisen.

Von besonderem Vorteil ist es, wenn der Deckel in seiner geschlossenen Stellung zwischen die freien Endbereiche der der Schwenkachse zugewandten Flügel eintaucht, so dass diese in okklusal-gingivaler Richtung über den Deckel hervorstehen, wohingegen die der Schwenkachse abgewandten Flügel in okklusal-gingivaler Richtung auf derselben Höhe angeordnet sind wie der das mindestens eine Auflageteil umgreifende Endabschnitt des Deckels, so dass dieser Endabschnitt des Deckels in distal-mesialer Richtung mit den freien Endbereichen der benachbarten Flügel fluchtet.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer orthodontischen Befestigungsvorrichtung mit einem Verriegelungsglied in offener Stellung;
- Figur 2:: eine perspektivische Darstellung der orthodontischen Befestigungsvorrichtung aus Figur 1 mit dem Verriegelungsglied in geschlossener Stellung und
- Figur 3:: eine weitere perspektivische Darstellung der orthodontischen Befestigungsvorrichtung aus Figur 1 mit dem Verriegelungsglied in geschlossener Stellung.

In der Zeichnung ist eine insgesamt mit dem Bezugszeichen 10 belegte erfindungsgemäße orthodontische Befestigungsvorrichtung schematisch dargestellt. Diese umfasst ein Bracket 11, das als einteiliger Formkörper ausgestaltet ist, sowie ein Verriegelungsglied 12, das eine Lagerwelle 13 aufweist und einen mit der Lagerwelle 13 verschweißten Deckel 14, der formelastisch ausgestaltet ist.

Das Bracket 11 weist eine Bracketbasis 16 auf, die an einem Zahn befestigt werden kann und die einen Bracketkörper 17 trägt mit einem Sockel 18. Vom Sockel 18 stehen der Bracketbasis 16 abgewandt ein erstes Flügelpaar 20 und ein zweites Flügelpaar 21 ab, die im Abstand zueinander angeordnet sind und zwischen sich einen Freiraum 22 definieren, der sich von der gingivalen Seite 23 bis zur okklusalen 24 des Brackets 11 erstreckt. Die beiden Flügelpaare 20 und 21 weisen jeweils einen okklusalseitigen Flügel 25 bzw. 26 und einen gingivalseitigen Flügel 27 bzw. 28 auf. Die okklusalseitigen Flügel 25, 26 und die gingivalseitigen Flügel 27, 28 begrenzen einen Schlitz 30, der in mesial-distaler Richtung verläuft und sich von der mesialen Seite bis zur distalen Seite des Bracketkörpers erstreckt. Der Schlitz 30 dient in üblicher Weise der Aufnahme eines an sich bekannten und deshalb in der Zeichnung nicht dargestellten Bogendrahtes.

Zwischen den beiden Flügelpaaren 20, 21 ist an die gingivalseitigen Flügel 27 und 28 jeweils ein Auflageteil 34 bzw. 35 angeformt, das oberseitig, das heißt der Bracketbasis 16 abgewandt, jeweils eine Auflagefläche 36 bzw. 37 ausbildet. Die Kontur der Auflageteile 34 und 35 entspricht der Kontur des jeweils unmittelbar benachbarten gingivalseitigen Flügels 27 bzw. 28, allerdings ist die Auflagefläche 36 bzw. 37 gegenüber der Oberseite 39 bzw. 40 der Flügel 27, 28 um die Materialstärke des Deckels 14 zurückgesetzt.

An die okklusalseitigen Flügel 25 und 26 ist zwischen den beiden Flügelpaaren 20, 21 jeweils ein Anschlagelement 42 bzw. 43 angeformt, dessen Oberseite 44 bzw. 45 gegenüber der Oberseite 46 bzw. 47 der okklusalseitigen Flügel 25 bzw. 26 ebenfalls um die Materialstärke des Deckels 14 zurückgesetzt ist. Die okklusalseitigen Flügel 25 und 26 erstrecken sich hierbei in okklusaler Richtung über die jeweiligen Anschlagelemente 42, 43 hinaus.

Unterhalb der okklusalseitigen Flügel 25, 26 ist an die okklusale Außenseite des Sockels 18 und die dem Bracketkörper 17 zugewandte Oberseite 50 der Bracketbasis 16 jeweils ein Lagerteil 52 bzw. 53 angeformt, das eine in distal-mesialer Richtung verlaufende und das jeweilige Lagerteil 52 bzw. 53 durchgreifende Lagerbohrung 55 bzw. 56 aufweist.

Die Lagerwelle 13 definiert eine parallel zur Längsrichtung des Schlitzes 30 verlaufende Schwenkachse 58 und taucht mit ihren Endabschnitten in die Lagerbohrungen 55 und 56 ein. Sie ist in den Lagerbohrungen 55 und 56 um die Schwenkachse 58 drehbar gelagert. Die Lagerwelle 13 ist ebenso wie die Lagerbohrungen 55, 56 im Querschnitt kreisförmig ausgestaltet und bildet mit den Lagerbohrungen 55, 56 jeweils einen Formschluss aus. Zwischen den beiden Lagerteilen 52 und 53 ist die Lagerwelle 13 mit dem Deckel 14 verschweißt, der im Wesentlichen C-förmig gekrümmt ist.

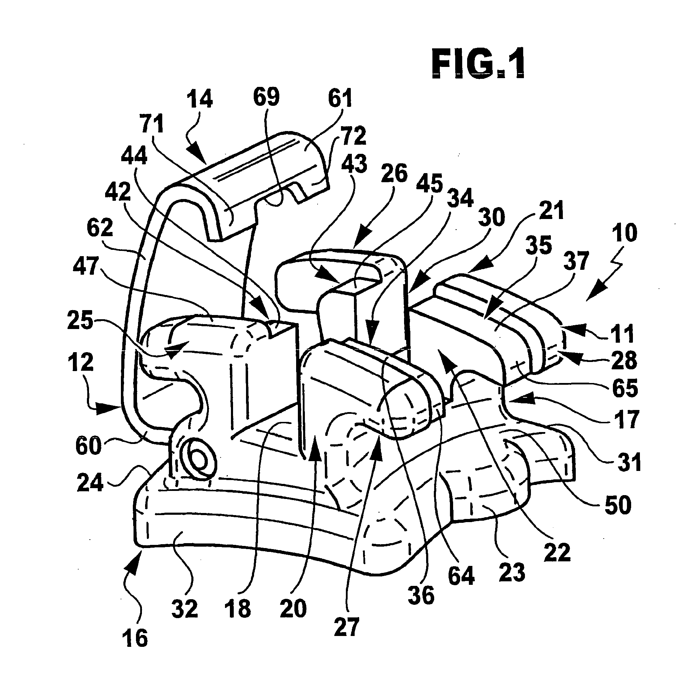

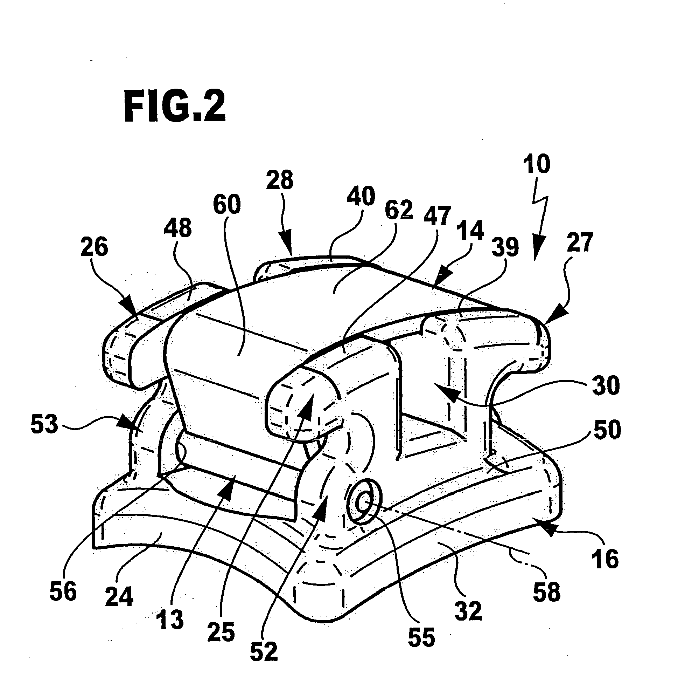

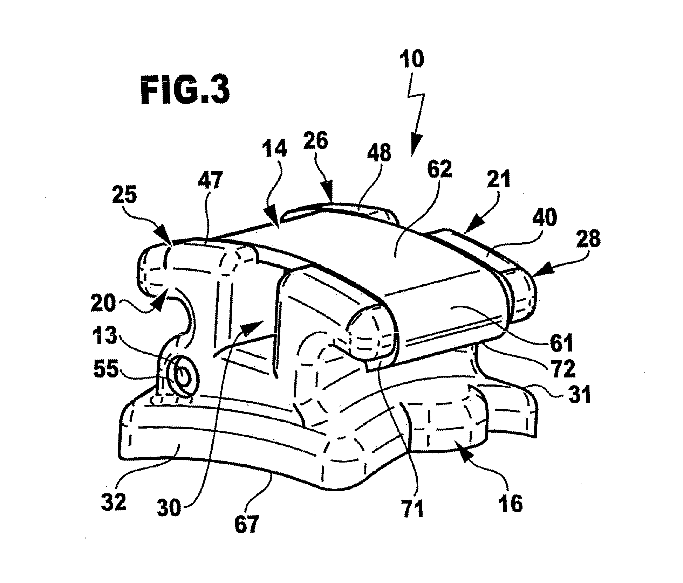

Der Deckel 14 weist einen der Lagerwelle 13 zugewandten ersten Endbereich 60 und einen der Lagerwelle 13 abgewandten zweiten Endbereich 61 auf. Die beiden Endbereiche 60 und 61 sind über einen Zwischenbereich 62 miteinander verbunden. Der Deckel 14 kann zwischen einer in Figur 1 dargestellten offenen Stellung, in der er den Schlitz 30 freigibt, und einer in den Figuren 2 und 3 dargestellten geschlossenen Stellung, in der er mit seinem Zwischenbereich 62 den Schlitz 30 abdeckt, hin und her verschwenkt werden. In seiner geschlossenen Stellung liegt er auf den Anlageelementen 42, 43 und den Auflageteilen 34 und 35 auf, wobei er mit zwei stirnseitig angeordneten Rastvorsprüngen 71, 72 die dem Schlitz abgewandten Endbereiche 64 bzw. 65 der Auflageteile 34 bzw. 35 hintergreift. Zwischen den beiden Rastvorsprüngen 71, 72 weist der Deckel eine Aussparung 69 auf, die als Werkzeug-Eingriffshilfe dient zum einfachen Öffnen des Deckels. Dies wird insbesondere aus Figur 3 deutlich. Aufgrund seiner Formelastizität kann der Deckel 14 mittels der Rastvorsprünge 71, 72 mit den freien Endbereichen 64, 65 der beiden Auflageteile 34, 35 verrastet werden. Soll der Deckel wieder geöffnet werden, so ist es hierzu lediglich erforderlich, ihn mit einem in die Aussparung 69 eingreifenden Werkzeug derart elastisch zu verformen, dass er die freien Endbereiche 64, 65 der beiden Auflageteile 34 bzw. 35 wieder freigibt.

Wie insbesondere aus den Figuren 1 und 2 deutlich wird, weist die orthodontische Befestigungsvorrichtung 10 auf ihrer der Bracketbasis 16 abgewandten Oberseite eine glatte Oberfläche auf. Dies wird durch das Zurücksetzen der Oberseiten 44, 45 der Anlageelemente 42, 43 sowie der Oberseiten 39 und 40 der Auflageteile 34, 35 gegenüber den Oberseiten der Flügel 25, 26 und 27, 28 sichergestellt. Der zweite Endbereich 61 fluchtet in der geschlossenen Stellung des Deckels 14 mit den Enden der gingivalseitigen Flügel 27, 28, wohingegen der erste Endbereich 60 in der geschlossenen Stellung des Deckels 14 zwischen die okklusalseitigen Flügel 25, 26 in okklusal-gingivaler Richtung eintaucht.

Die Herstellung der orthodontischen Befestigungsvorrichtung 10 gestaltet sich sehr einfach. Hierzu kann in einem ersten Fertigungsschritt das Bracket 11 als Formkörper in einem Gießverfahren hergestellt werden, anschließend kann die Lagerwelle 13 in die Lagerbohrungen 55 und 56 eingeführt werden, und danach kann der Deckel 14 beispielsweise mit Hilfe eines Laserschweißverfahrens mit der Lagerwelle 13 verschweißt werden.

Die erfindungsgemäße orthodontische Befestigungsvorrichtung 10 zeichnet sich somit durch eine kostengünstige Herstellung aus. Sie weist einen konstruktiv einfachen Aufbau auf und ermöglicht es dem Kieferorthopäden, einen Bogendraht im Schlitz 30 zuverlässig festzulegen, wobei er den Bogendraht jederzeit dem Schlitz 30 wieder entnehmen kann. Die orthodontische Befestigungsvorrichtung 10 kann hierbei eine geringe Höhe aufweisen, das heißt einen geringen Abstand zwischen der dem Zahn zugewandten Unterseite 67 der Bracketbasis 16 und der Oberseite der Flügel 25, 26, 27 und 28. Durch den Fornschluss zwischen der im Querschnitt kreisförmigen Lagerwelle 13 und den im Querschnitt ebenfalls kreisförmigen Lagerbohrungen 55, 56 wird dem Deckel 14 eine leichtgängige Führung bereitgestellt. Mittels der beiden Rastvorsprünge 71, 72 kann der Deckel 14 zuverlässig mit dem Bracket 11 verrastet werden, ohne dass starke Kräfte auf den Deckel 14 ausgeübt werden müssen.

## Patentansprüche

1. Orthodontische Befestigungsvorrichtung mit einem Bracket und einem Verriegelungsglied, wobei das Bracket eine Bracketbasis aufweist, die an einem Zahn befestigbar ist, sowie einen Bracketkörper, der von der Bracketbasis absteht und einen von mesial nach distal verlaufenden Schlitz umfasst zur Aufnahme eines Bogendrahtes sowie zwei im Abstand zueinander angeordnete Flügelpaare, die jeweils einen in gingivale Richtung und einen in okklusale Richtung vom Schlitz abstehenden Flügel aufweisen, und wobei das Verriegelungsglied einen Deckel umfasst, der zwischen einer offenen, den Schlitz freigebenden Stellung und einer geschlossenen, den Schlitz im Bereich zwischen den beiden Flügelpaaren überdeckenden Stellung um eine parallel zur Längsrichtung des Schlitzes ausgerichtete Schwenkachse schwenkbar am Bracket gelagert ist und der in seiner geschlossenen Stellung mit dem Bracketkörper verrastbar ist, **dadurch gekennzeichnet, dass** das Bracket (11) zumindest eine Lagerbohrung (55, 56) aufweist, deren Längsachse parallel zur Längsrichtung des Schlitzes ausgerichtet ist und in der eine im Querschnitt runde Lagerwelle (13) drehbar gelagert ist, und dass der Deckel (14) an der Lagerwelle (13) drehfest gehalten ist.

2. Orthodontische Befestigungsvorrichtung nach Anspruch 1, **dadurch gekennzeichnet, dass** sowohl die mindestens eine Lagerbohrung (55, 56) als auch die Lagerwelle (13) einen kreisförmigen Querschnitt aufweisen.

3. Orthodontische Befestigungsvorrichtung nach Anspruch 1 oder 2, **dadurch gekennzeichnet, dass** der Deckel (14) mit der Lagerwelle (13) stoffschlüssig verbunden ist.

4. Orthodontische Befestigungsvorrichtung nach Anspruch 3, **dadurch gekennzeichnet, dass** der Deckel (14) mit der Lagerwelle (13) verschweißt ist.

5. Orthodontische Befestigungsvorrichtung nach einem der voranstehenden Ansprüche, **dadurch gekennzeichnet, dass** das Bracket (11) zwei fluchtend zueinander angeordnete Lagerbohrungen (55, 56) aufweist, die jeweils einen Endabschnitt der Lagerwelle (13) aufnehmen.

6. Orthodontische Befestigungsvorrichtung nach einem der voranstehenden Ansprüche, **dadurch gekennzeichnet, dass** jede Lagerbohrung (55, 56) in einem Lagerteil (52, 53) angeordnet ist, das einstückig mit dem Bracketkörper (17) und/oder der Bracketbasis (16) verbunden ist.

7. Orthodontische Befestigungsvorrichtung nach Anspruch 6, **dadurch gekennzeichnet, dass** das Bracket (11) zwei Lagerteile (52, 53) umfasst, die jeweils eine Lagerbohrung (55, 56) aufweisen und die bezogen auf die Längsrichtung des Schlitzes (30) jeweils in Höhe eines Flügels (25, 26) mit dem Bracketkörper (17) und/oder der Bracketbasis (16) einstückig verbunden sind.

8. Orthodontische Befestigungsvorrichtung nach Anspruch 6 oder 7, **dadurch gekennzeichnet, dass** die Bracketbasis (16) zusammen mit dem Bracketkörper (17) und dem mindestens einen Lagerteil (52, 53) ein einstückiges Formteil aus Kunststoff, aus Keramik oder aus Metall ausbildet.

9. Orthodontische Befestigungsvorrichtung nach einem der voranstehenden Ansprüche, **dadurch gekennzeichnet, dass** der Deckel (14) zwei Rastelemente (71, 72) aufweist zum Verrasten des Deckels (14) mit dem Bracketkörper (17).

10. Orthodontische Befestigungsvorrichtung nach Anspruch 9, **dadurch gekennzeichnet, dass** der Deckel (14) zwischen den beiden Rastelementen (71, 72) eine Aussparung aufweist.

11. Orthodontische Befestigungsvorrichtung nach einem der voranstehenden Ansprüche, **dadurch gekennzeichnet, dass** im Bereich zwischen den beiden Flügelpaaren (20, 21) zumindest ein Auflageteil (34, 35) seitlich neben einem Flügel (25, 26) und im Abstand zum benachbarten Flügel (26 bzw. 25) angeordnet ist, wobei der Deckel (14) in seiner geschlossenen Stellung auf dem Auflageteil (34, 35) aufliegt und einen vom Schlitz (30) abgewandten Endbereich (64, 65) des Auflageteils (34, 35) federelastisch hintergreift.

12. Orthodontische Befestigungsvorrichtung nach Anspruch 11, **dadurch gekennzeichnet, dass** der Deckel (14) in seiner geschlossenen Stellung lediglich den Bereich zwischen den beiden Flügelpaaren (20, 21) überdeckt.

13. Orthodontische Befestigungsvorrichtung nach Anspruch 11 oder 12, **dadurch gekennzeichnet, dass** das mindestens eine Auflageteil (34, 35) einstückig mit einem Flügel (25, 26) verbunden ist.

14. Orthodontische Befestigungsvorrichtung nach Anspruch 11, 12 oder 13, **dadurch gekennzeichnet, dass** die Oberseite (36, 37) des mindestens einen Auflageteils (34, 35) um die Materialstärke des Deckels (14) gegenüber der Oberseite (47, 48) des unmittelbar benachbarten Flügels (25, 26) zurückgesetzt ist.

15. Orthodontische Befestigungsvorrichtung nach einem der Ansprüche 11 bis 14, **dadurch gekennzeichnet, dass** der Bracketkörper (17) mindestens zwei im Abstand zueinander angeordnete Auflageteile (34, 35) aufweist, die im Bereich zwischen den beiden Flügelpaaren (20, 21) jeweils seitlich neben einem Flügel (25, 26) angeordnet sind.

16. Orthodontische Befestigungsvorrichtung nach einem der Ansprüche 11 bis 15, **dadurch gekennzeichnet, dass** der Bracketkörper (17) zumindest ein Anschlagelement (42, 43) aufweist, das im Bereich zwischen den beiden Flügelpaaren (20, 21) seitlich neben einem Flügel (27, 28) angeordnet ist und auf dessen Oberseite (44, 45) der Deckel (14) in seiner geschlossenen Stellung aufliegt.

17. Orthodontische Befestigungsvorrichtung nach Anspruch 16, **dadurch gekennzeichnet, dass** das mindestens eine Anschlagelement (42, 43) einstückig mit einem Flügel (27, 28) verbunden ist.

18. Orthodontische Befestigungsvorrichtung nach Anspruch 16 oder 17, **dadurch gekennzeichnet, dass** die Oberseite (44, 45) des mindestens einen Anschlagelementes (42, 43) gegenüber der Oberseite (47, 48) des unmittelbar benachbarten Flügels (25, 26) um die Materialstärke des Deckels (14) zurückgesetzt ist.

19. Orthodontische Befestigungsvorrichtung nach Anspruch 16, 17 oder 18, **dadurch gekennzeichnet, dass** der Bracketkörper (17) zwei im Abstand zueinander angeordnete Anschlagelemente (42, 43) aufweist, die im Bereich zwischen den beiden Flügelpaaren (20, 21) jeweils seitlich neben einem Flügel (25, 26) angeordnet sind.
